# EUROPEAN PATENT SPECIFICATION

(11) **EP 2 314 651 B1**
(45) Date of publication and mention of the grant of the patent: **10.10.2012**
(21) Application number: 09806659.0
(22) Date of filing: 04.08.2009
(51) Int. Cl.: C09J 133/04, C09J 7/02, C09J 11/04, C09J 151/06, C09J 157/00, G02B 5/30

(54) **ADHESIVE COMPOSITION, ADHESIVE LAYER, AND ADHESIVE SHEET**
HAFTZUSAMMENSETZUNG, HAFTSCHICHT UND HAFTFOLIE
COMPOSITION ADHÉSIVE, COUCHE ADHÉSIVE, ET FEUILLE ADHÉSIVE

(30) Priority: 11.08.2008 JP 2008206838
(43) Date of publication of application: 27.04.2011
(73) Proprietor: Nitto Denko Corporation, Ibaraki-shi Osaka 567-8680 (JP)
(72) Inventor: MOROISHI, Yutaka, Ibaraki-shi Osaka 567-8680 (JP); HIRANO, Keisuke, Ibaraki-shi Osaka 567-8680 (JP); NAKANO, Fumiko, Ibaraki-shi Osaka 567-8680 (JP); TANAKA, Akiko, Ibaraki-shi Osaka 567-8680 (JP)
(74) Representative: Grünecker, Kinkeldey, Stockmair & Schwanhäusser
(86) International application number: PCT/JP2009/063795
(87) International publication number: WO 2010/018766

(56) References cited:
- EP-A1- 1 852 484
- JP-A- 2002 173 656
- JP-A- 2003 342 546
- JP-A- 2006 342 258
- JP-A- 2008 063 350
- US-A- 4 162 997

## Description

### TECHNICAL FIELD

The invention relates to a metal-based fine particles-containing, pressure-sensitive adhesive composition, to a pressure-sensitive adhesive layer obtained from the pressure-sensitive adhesive composition, and to a pressure-sensitive adhesive sheet including a support and the pressure-sensitive adhesive layer provided on at least one side of the support, all of which are applicable to various uses.

### BACKGROUND ART

There have been attempts to improve the mechanical strength and other physical properties of pressure-sensitive adhesives and polymer compositions by mixing various types of fine particles into the pressure-sensitive adhesives and polymer compositions, which have a wide range of applications. Methods of uniformly dispersing fine particles in a composition are generally used, in which the fine particles are surface-treated, or the composition is processed in various types of dispersing machines.

For example, various types of silane coupling agents are added to a colloidal silica gel with a particle size of 30 nm or less so that the silica surface can modified, and the product is mixed with a polymer solution to form a pressure-sensitive adhesive. The fine particles present therein can reduce the volume shrinkage rate, so that the effect of increasing the adhesive strength itself can be expected to be produced (Patent Document 1).

It is proposed that nanoparticles should be added as a diffusing pressure-sensitive adhesive for an increase in contrast or viewing angle, but specific methods for stabilization and dispersion are not shown in the proposal (Patent Document 2).

There is also disclosed a method including surface-treating metal oxide particles of a size of 200 nm or less with a surface modifier such as a long-chain aliphatic acid or an organosilane and dispersing them in a monomer or the like to form an adhesive syrup (Patent Document 3).

There is also proposed an ultraviolet blocking pressure-sensitive adhesive prepared by a process including mixing zinc oxide fine particles with a size of 0.2 µm or less into an acrylic polymer having a hydroxyl group-containing copolymerized monomer component, while using an organic solvent not capable of producing an acid functional group, and applying the mixture (Patent Document 4).

However, when the fine particles prepared by the surface treatment method are dispersed in various compositions, the fine particles may aggregate to form a cloudy composite material, so that haze can be generated, depending on the type of the polymer. Therefore, the type of the solvent, the surface modifier, or the coupling agent has to be changed as needed depending on the composition of the polymer. In fact, various examinations have to be performed for optimization, and such screening is complicated. In some cases, there is also the disadvantage that general-purpose solvents cannot be used.

### PRIOR ART DOCUMENTS

### Patent Documents

Patent Document 1 : Japanese Patent Application Laid-Open (JP-A) No. 2005-255706
Patent Document 2: JP-A No. 2005-301213
Patent Document 3: JP-A No. 2003-513122
Patent Document 4: JP-A No. 2005-213482

### SUMMARY OF THE INVENTION

### PROBLEMS TO BE SOLVED BY THE INVENTION

An objective of the invention is to provide a pressure-sensitive adhesive composition containing stably dispersed metal-based fine particles and being capable of achieving desired physical properties through no complicated process.

Another objective of the invention is to provide a pressure-sensitive adhesive layer produced from the above pressure-sensitive adhesive composition and to provide a pressure-sensitive adhesive sheet having the pressure-sensitive adhesive layer.

### MEANS FOR SOLVING THE PROBLEMS

As a result of investigations to solve the above problems, the inventors have found the pressure-sensitive adhesive composition described below and therefore completed the invention.

Specifically, the invention is directed to a pressure-sensitive adhesive composition including a (meth)acrylic polymer including, as a monomer component, 50% by weight or more of a (meth)acrylate represented by the formula CH₂=C(R₁)COOR₂, wherein R₁ represents hydrogen or a methyl group, and R₂ represents a substituted or unsubstituted alkyl group of 1 to 20 carbon atoms, having a weight average molecular weight of 500,000 to 3,000,000 as determined by gel permeation chromatography, and being substantially free of an acid component; 5 to 100 parts by weight of a low-molecular-weight aromatic polymer having a weight average molecular weight of 500 to 4,000 as determined by gel permeation chromatography, based on 100 parts by weight of a (meth)acrylic polymer; and 5 to 100 parts by weight of metal-based fine particles having an average particle size of 5 to 100 nm, based on 100 parts by weight of a (meth)acrylic polymer.

In the pressure-sensitive adhesive composition, the (meth)acrylic polymer is preferably a copolymer further including, as a monomer component, 0.05 to 10% by weight of a hydroxyl group-containing (meth)acrylate represented by the formula CH₂=C(R₁)COOCₙH₂ₙOH, wherein R₁ represents hydrogen or a methyl group, and n represents an integer of 1 to 10.

The pressure-sensitive adhesive composition preferably further includes 0.02 to 2 parts by weight of a crosslinking agent, based on 100 parts by weight of the (meth)acrylic polymer.

In the pressure-sensitive adhesive composition, the (meth)acrylic polymer may be a graft polymer having a side chain (branch) including a composition different from a backbone-forming main chain.

In the pressure-sensitive adhesive composition, the backbone-forming main chain may have a glass transition temperature of 250 K or less, and/or the branch-forming side chain may have a glass transition temperature of 300 K or more.

The invention is also directed to a pressure-sensitive adhesive layer obtained from any of the pressure-sensitive adhesive compositions specified above.

The pressure-sensitive adhesive layer preferably has a gel fraction of 40 to 90% by weight.

The pressure-sensitive adhesive layer preferably has a haze of 20% or less.

The invention is also directed to a pressure-sensitive adhesive sheet including a support and any of the above pressure-sensitive adhesive layers formed on at least one side of the support.

### EFFECT OF THE INVENTION

The pressure-sensitive adhesive composition of the invention contains stably dispersed metal-based fine particles and has more reinforced mechanical properties and excellent refractive index and adhesive strength and therefore is useful for a wide range of applications.

### EMBODIMENTS FOR CARRYING OUT THE INVENTION

The pressure-sensitive adhesive composition of the invention for use in an optical component includes, as a base polymer, a (meth)acrylic polymer including 50% by weight or more of a monomer unit derived from a (meth)acrylate represented by the formula CH₂=C(R₁) COOR₂, wherein R₁ represents hydrogen or a methyl group, and R₂ represents a substituted or unsubstituted alkyl group of 1 to 20 carbon atoms, having a weight average molecular weight of 500,000 to 3,000,000 as determined by gel permeation chromatography, and being substantially free of an acid component.

The substituted or unsubstituted alkyl group of 1 to 20 carbon atoms represented by R² includes a straight-chain or branched-chain alkyl group or a cyclic cycloalkane. The substituent of the substituted alkyl group is preferably an aryl group of 3 to 8 carbon atoms or an aryloxy group of 3 to 8 carbon atoms. The aryl group is preferably, but not limited to, a phenyl group.

Examples of the monomer represented by the formula CH₂=C(R₁) COOR₂ include methyl (meth) acrylate, ethyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate, phenoxyethyl (meth)acrylate, and benzyl (meth)acrylate. These may be used alone or in any combination.

In the invention, the content of the monomer represented by the formula CH₂=C(R₁) COOR₂ is preferably from 50% by weight or more and 99.9% by weight or less, based on the amount of all the monomer components for the (meth)acrylic polymer. Particularly in view of polymerizability and stability of a dispersion of metal-based fine particles, the content of butyl (meth)acrylate is preferably 50% by weight or more, more preferably 60% by weight or more and preferably 99.5% by weight or less, more preferably 99% by weight or less, even more preferably 95% by weight or less, still more preferably 90% by weight or less.

In addition, the (meth)acrylic polymer according to the invention may contain a hydroxyl group-containing monomer represented by the formula CH₂=C (R₁) COOCₙH₂ₙOH or CH₂=C (R₁) CONHCₙH₂ₙOH. Specifically, this monomer contains a hydroxyalkyl group having one or more carbon atoms and one hydroxyl group.

Examples of such a monomer include a hydroxyalkyl (meth)acrylate such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, or 12-hydroxylauryl (meth)acrylate; a hydroxyalkyl cycloalkane (meth)acrylate such as 4-hydroxymethylcyclohexyl (meth)acylate; or an amide such as hydroxyethylacrylamide.

The content of the hydroxyl group-containing monomer, if any, may be from 0.05% by weight to 10% by weight, based on the total amount of the monomer components to form the (meth)acrylic polymer. The content of the hydroxyl group-containing monomer is preferably from 0.05% by weight to 5% by weight, more preferably from 0.1% by weight to 1% by weight.

Other copolymerizable monomers may be used alone or in combination as a monomer component(s), as long as the objectives of the invention are not hindered. In the invention, however, the (meth)acrylic polymer is substantially free of an acid component. As used herein, the term "substantially free of an acid component" means that the polymer is completely free of an acid component or may contain at most less than 0.1% by weight of an acid component in the polymer.

Examples of such other copolymerizable monomers that may be used include vinyl monomers such as vinyl acetate, vinyl propionate, styrene, α-methylstyrene, and N-vinylcaprolactam; epoxy group-containing monomers such as glycidyl (meth)acrylate, methylglycidyl (meth)acrylate, and 3,4-epoxycyclohexylmethyl (meth)acrylate; glycol acrylate monomers such as polyethylene glycol (meth)acrylate, polypropylene glycol (meth)acrylate, methoxyethylene glycol (meth)acrylate, and methoxypolypropylene glycol (meth)acrylate; acrylate monomers such as tetrahydrofurfuryl (meth)acrylate, fluoro(meth)acrylate, silicone (meth)acrylate, and 2-methoxyethyl acrylate; and amide group-containing monomers, amino group-containing monomers, imide group-containing monomers, N-acryloylmorpholine, and vinyl ether monomers.

A silane monomer containing a silicon atom may also be used. Examples of such a silane monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The (meth)acrylic polymer of the invention has a weight average molecular weight of 500,000 or more, preferably 700,000 or more, more preferably 800,000 or more. If the weight average molecular weight is less than 500,000, the pressure-sensitive adhesive layer may have low durability or low cohesive strength so that an adhesive deposit may be more likely to be formed. If the weight average molecular weight is more than 3,000,000, the laminating properties or the adhesive strength may be undesirably reduced, which is not preferred. In this case, the pressure-sensitive adhesive composition may have too high viscosity in a solution system, so that it may be difficult to apply. The weight average molecular weight may refer to a polystyrene-equivalent weight average molecular weight measured and calculated by gel permeation chromatography (GPC).

The (meth)acrylic polymer may be produced by any appropriately selected known method such as solution polymerization, bulk polymerization, emulsion polymerization, or various types of radical polymerization. The resulting (meth)acrylic polymer may be any of a random copolymer, a block copolymer and a graft copolymer.

In solution polymerization, for example, ethyl acetate, toluene or the like is used as a polymerization solvent. An example of solution polymerization includes performing the reaction under a stream of inert gas such as nitrogen in the presence of a polymerization initiator typically under the reaction conditions of a temperature of about 50 to about 70°C and a time period of about 5 to about 30 hours.

Any appropriately selected polymerization initiator, chain transfer agent, emulsifying agent, or the like may be used for radical polymerization. The weight average molecular weight of the (meth)acrylic polymer may be controlled by the amount of addition of the polymerization initiator or the chain transfer agent or by the reaction conditions. The amount of the addition may be controlled as appropriate depending on the type of these materials.

Examples of the polymerization initiator include, but are not limited to, azo initiators such as 2,2'-azobisisobutylonitrile, 2,2'-azobis(2-amidinopropane)dihydrochloride, 2,2'-azobis[2-(5-methyl-2-imidazoline-2-yl)propane]dihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057, manufactured by Wako Pure Chemical Industries, Ltd.); persulfates such as potassium persulfate and ammonium persulfate; peroxide initiators such as di(2-ethylhexyl)peroxydicarbonate, di(4-tert-butylcyclohexyl)peroxydicarbonate, di-sec-butylperoxydicarbonate, tert-butylperoxyneodecanoate, tert-hexylperoxypivalate, tert-butylperoxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, tert-butylperoxyisobutylate, 1,1-di(tert-hexylperoxy)cyclohexane, tert-butylhydroperoxide, and hydrogen peroxide; and redox system initiators of a combination of a peroxide and a reducing agent, such as a combination of a persulfate and sodium hydrogen sulfite and a combination of a peroxide and sodium ascorbate.

The above polymerization initiators may be used alone or in combination of two or more thereof. The total content of the polymerization initiator is preferably from about 0.005 to about 1 part by weight, more preferably from about 0.02 to about 0.5 part by weight, based on 100 parts by weight of the monomer(s).

For example, when the (meth)acrylic polymer with a weight average molecular weight as stated above is produced using 2,2'-azobisisobutylonitrile as a polymerization initiator, the amount of the polymerization initiator is preferably from about 0.06 to about 0.2 part by weight, more preferably from about 0.08 to about 0.175 part by weight, based on 100 parts by weight of all the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. The chain transfer agents may be used alone or in combination of two or more thereof. The total content of the transfer agent(s) should be about 0.1 part by weight or less, based on 100 parts by weight of all the monomers.

Examples of the emulsifier for use in emulsion polymerization include anionic emulsifiers such as sodium lauryl sulfate, ammonium lauryl sulfate, sodium dodecylbenzenesulfonate, ammonium polyoxyethylene alkyl ether sulfate, and sodium polyoxyethylene alkyl phenyl ether; and nonionic emulsifiers such as polyoxyethylene alkyl ether, polyoxyethylene alkyl phenyl ether, polyoxyethylene fatty acid ester, and polyoxyethylene-polyoxypropylene block polymers. These emulsifiers may be used alone or in combination of two or more thereof.

The emulsifier may be a reactive emulsifier. Examples of such an emulsifier having an introduced radical-polymerizable functional group such as a propenyl group or an allyl ether group include Aqualon HS-10, HS-20, KH-10, BC-05, BC-10, and BC-20 (each manufactured by DAI-ICHI KOGYO SEIYAKU CO., LTD.) and ADEKA REASOAP SE10N (manufactured by ADEKA CORPORATION). The reactive emulsifier is preferred, because after polymerization, it can be incorporated into a polymer chain to improve water resistance. Based on 100 parts by weight of all the monomer components, the emulsifier is preferably used in an amount of 0.3 to 5 parts by weight, more preferably of 0.5 to 1 part by weight, in view of polymerization stability or mechanical stability.

In bulk polymerization, the same monomer as the monomer that finally forms the acrylic polymer according to the invention may be used in place of a solvent for polymerization. Such bulk polymerization is also advantageous in that a drying process for solvent removal is unnecessary, so that a pressure-sensitive adhesive film can be directly obtained.

In this process, not only polymerization using heat but also polymerization using active energy rays may be performed. In the case of the polymerization using heat, an azo initiator or a peroxide initiator as used for solution polymerization may be used. In the case of using active energy rays, for example, when ultraviolet rays are used, a photopolymerization initiator capable of producing radicals upon ultraviolet irradiation may be used, such as 1-hydroxy-cyclohexyl-phenyl ketone, 2,2-dimethoxy-1,2-diphenylethane-1-one, 2-hydroxy-2-methyl-1-phenyl-propane-1-one, or 2-methyl-1-(4-methylthio)phenyl-2-morpholinopropane-1-one. Such a photo-initiator may be used in an amount of 0.02 to 2 parts by weight, based on 100 parts by weight of all the monomers as raw materials for the (meth)acrylic polymer.

In these cases, a polyfunctional monomer may also be used together to control crosslinking. Examples of such a polyfunctional monomer include diethylene glycol diacrylate, diethylene glycol dimethacrylate, ethylene glycol diacrylate, ethylene glycol dimethacrylate, tetraethylene glycol diacrylate, tetraethylene glycol dimethacrylate, neopentylglycol diacrylate, neopentylglycol dimethacrylate, 1,6-hexanediol diacrylate, 6-hexanediol dimethacrylate, trimethylolpropane triacrylate, trimethylolpropane trimethacrylate, pentaerythritol triacrylate, pentaerythritol trimethacrylate, dipentaerythritol hexaacrylate, and dipentaerythritol hexamethacrylate. The content of any of these polyfunctional monomers may be from 0.01 to 2% by weight, based on the amount of all the monomers. In this range, durability can be kept with an appropriate level of crosslinking.

When ultraviolet rays are used as active energy rays, an ultraviolet generating lamp such as a high-pressure mercury lamp or a metal halide lamp may be used. The amount of irradiation is determined taking into account the degree of polymerization of the mixture. In general, irradiation is performed at a dose of about 300 mJ/cm² to 3 J/cm².

A hundred parts by weight of the resulting (meth)acrylic polymer may be mixed with 10 to 200 parts by weight of a monomer different from a component of the polymer, and, if necessary, a solvent may be prepared. The mixture may be subjected to a graft polymerization reaction with 0.02 to 5 parts by weight of a peroxide, so that the physical properties can be controlled.

In this process, the monomer different from a component may be, but not limited to, any of various (meth)acrylic monomers, and is preferably a monomer that makes up only 10% by weight or less of the backbone polymer structure; styrene or a styrene derivative such as α-styrene; or vinyltoluene or a derivative such as α-vinyltoluene.

Any graft polymerization method known to those skilled in the art may be used. For example, when solution polymerization is performed, a graft polymerization method may include adding a monomer to be graft-polymerized and a solvent for viscosity control to the (meth)acrylic polymer solution after the reaction to form the backbone structure, replacing the air with nitrogen, then adding 0.02 to 5 parts by weight of a peroxide, and heating the mixture at 50°C to 80°C for 4 to 15 hours.

When emulsion polymerization is performed, a graft polymerization method may include adding water for solid content control to an aqueous dispersion of the (meth)acrylic polymer, further adding a necessary monomer, replacing the air with nitrogen under stirring, so that the monomer to be graft-polymerized is absorbed to the (meth)acrylic polymer particles, then adding an aqueous solution of a water-soluble peroxide, and heating the mixture at 50 to 80°C for 4 to 15 hours, to complete the reaction.

When a monomer is polymerized in the presence of the (meth)acrylic polymer as described above, graft polymerization occurs, although a homopolymer of the monomer is also produced. The homopolymer of the monomer subjected to graft polymerization will be uniformly present in the (meth)acrylic polymer.

If the amount of the peroxide used as an initiator in the process of graft polymerization is too small, performing the graft polymerization reaction may take a long time. If the amount is too large, the amount of the homopolymer may be undesirably increased.

The resulting graft polymer has excellent heat resistance. Particularly when the backbone polymer contains a hydroxyl group-containing (meth)acrylic monomer unit, the position at which hydrogen is withdrawn and the compatibility of the graft polymer or the produced homopolymer come into play in a complex manner to provide higher heat resistance.

In the invention, the (meth)acrylic polymer of the backbone polymer (main chain) in a normal or graft (meth)acrylic polymer preferably has a glass transition temperature of 250 K or less. When such a polymer is used, the resulting final pressure-sensitive adhesive composition can have high heat resistance. More preferably, the polymer that forms the branch (side chain) of the graft polymer preferably has a glass transition temperature of 300 K or more. For example, such a glass transition temperature may be obtained by a process including performing solution polymerization with 0.06 to 0.2 part of a polymerization initiator such as azobisisobutyronitrile or benzoyl peroxide and performing the reaction with a polymerization solvent such as ethyl acetate under a nitrogen stream at 50°C to 70°C for 8 to 30 hours. The glass transition temperature (Tg) may be calculated from the following Fox formula: 1/Tg=W1/Tg1+W2/Tg2+W3/Tg3+..., wherein Tg1, Tg2, Tg3, and so on each represent the glass transition temperature (expressed by absolute temperature) of each of homopolymers 1, 2, 3, and so on of the copolymerized components, and W1, W2, W3, and so on each represent the weight fraction of each copolymerized component. The glass transition temperature (Tg) of each homopolymer was obtained from Polymer Handbook, 4th edition, John Wiley & Sons. Inc.

The pressure-sensitive adhesive composition of the invention contains 100 parts by weight of the (meth)acrylic polymer described above, 5 to 100 parts by weight of a low-molecular-weight aromatic polymer having a weight average molecular weight of 500 to 4,000 as determined by gel permeation chromatography, and 5 to 100 parts by weight of metal-based fine particles having an average particle size of 5 to 100 nm.

For example, examples of a monomer forming the low-molecular-weight aromatic polymer include an aromatic ring-containing monomer having an aromatic ring and an unsaturated double bond-containing polymerizable functional group such as a (meth)acryloyl group or a vinyl group. Typical examples of the aromatic ring-containing monomer include phenoxyethyl (meth)acrylate, benzyl (meth)acrylate, phenol ethylene oxide-modified (meth)acrylate, 2-naphthethyl (meth)acrylate, 2-(4-methoxy-1-naphthoxy)ethyl (meth)acrylate, phenoxypropyl (meth)acrylate, phenoxydiethylene glycol (meth)acrylate, and polystyryl (meth)acrylate. Besides the above, styrene, a styrene derivative such as α-methylstyrene, vinyltoluene, or α-vinyltoluene may also be used.

The weight average molecular weight is from 500 to 4,000, preferably from 500 to 3,000, more preferably from 700 to 2,000. If the molecular weight departs from the range, the metal-based fine particles may be less effectively stabilized, so that the fine particles may aggregate.

The low-molecular-weight polymer may be synthesized by any appropriate method such as a method of controlling the molecular weight using mercaptan or an α-methyl styrene dimer in normal radical polymerization, a living radical polymerization method using a polymerization initiator in the presence of a transition metal and a ligand, or an anionic polymerization method.

The content of the low-molecular-weight aromatic polymer is from 5 to 100 parts by weight, preferably from 5 to 80 parts by weight, more preferably 10 to 80 parts by weight, based on 100 parts by weight of the (meth)acrylic polymer. If the content is less than the lower limit, the metal-based fine particles may aggregate. If the content is too high, the physical properties of the (meth)acrylic polymer may be undesirably changed.

The metal-based fine particles contained in the pressure-sensitive adhesive composition of the invention include, but are not limited to, silica or various metal oxides. Typical examples of the metal-based fine particles include silica, alumina, titania, zirconia, tin oxide, indium oxide, cadmium oxide, antimony oxide, ceria, zinc oxide, iron oxide, germanium oxide, indium oxide, silicon nitride, boron nitride, potassium titanate, wollastonite, sepiolite, acicular tin oxide, acicular magnesium oxide, layered clay mineral, and any combination thereof.

The metal-based fine particles may be in the form of bulks such as spheres, rectangular solids or any modification thereof, bulk, needles, or plates.

The metal-based fine particles have an average particle size of 5 to 100 nm, preferably 5 to 50 nm, more preferably 5 to 20 nm. When in the shape of needles or plates, they should have a maximum length of 5 to 100 nm, preferably 5 to 50 nm, more preferably 5 to 20 nm. The average particle size was measured by a dynamic light scattering method using Zetasizer NANO ZS manufactured by Malvern Instruments Ltd and indicated as a number average particle size.

The fine particles may be optionally stabilized by treating their surface with a dispersion stabilizer such as a silane coupling agent.

Examples of the dispersion stabilizer include a silane coupling agent such as octylmethoxysilane, γ-mercaptopropyltrimethoxysilane, γ-methacryloxypropyltrimethoxysilane, γ-glycidoxypropyltrimethoxysilane, or vinyltrimethoxysilane; and a silicone compound modified with any of various organic substances or a long-chain fatty acids such as lauric acid or oleic acid.

The dispersion stabilizers may be used alone or in combination of two or more thereof. The amount of the dispersion stabilizer required to entirely treat the metal-based fine particles should be from 1 to 80 parts by weight, based on 100 parts by weight of the metal-based fine particles.

The content of the metal-based fine particles is from 5 to 100 parts by weight, preferably from 5 to 80 parts by weight, more preferably from 10 to 80 parts by weight, based on 100 parts by weight of the (meth)acrylic polymer.

If the content is less than the lower limit, the metallic fine particles cannot deliver the performance. If the content is too high, the physical properties of the (meth)acrylic polymer may be undesirably changed.

The pressure-sensitive adhesive composition of the invention may further contain a crosslinking agent such as an isocyanate crosslinking agent, an epoxy crosslinking agent, an oxazoline crosslinking agent, or a peroxide. The pressure-sensitive adhesive composition of the invention may also be crosslinked using active energy rays. Particularly in the invention, an isocyanate crosslinking agent or a peroxide crosslinking agent or a combination thereof is preferably used.

The isocyanate crosslinking agent for use as a crosslinking agent is intended to include a compound having two or more isocyanate groups (including an isocyanate-regenerating functional group produced by temporary protection of an isocyanate group with a blocking agent or by oligomerization of an isocyanate group, or the like) per molecule.

Examples of the isocyanate crosslinking agent include aromatic isocyanates such as tolylene diisocyanate and xylene diisocyanate, alicyclic isocyanates such as isophorone diisocyanate, and aliphatic isocyanates such as hexamethylene diisocyanate.

More specifically, examples of the isocyanate crosslinking agent include lower aliphatic polyisocyanates such as butylene diisocyanate and hexamethylene diisocyanate; alicyclic isocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane-tolylene diisocyanate trimer adduct (Coronate L (trade name) manufactured by NIPPON POLYURETHANE INDUSTRY CO., LTD.), a trimethylolpropane-hexamethylene diisocyanate trimer adduct (CORONATE HL (trade name) manufactured by NIPPON POLYURETHANE INDUSTRY CO., LTD.) and an isocyanurate of hexamethylene diisocyanate (CORONATE HX (trade name) manufactured by NIPPON POLYURETHANE INDUSTRY CO., LTD.); polyether polyisocyanates and polyester polyisocyanates; adducts thereof with various polyols; and polyisocyanates polyfunctionalized with an isocyanurate bond, a biuret bond, an allophanate bond, or the like. In particular, aliphatic isocyanates are preferably used, because of their high reaction speed.

One of the isocyanate crosslinking agents may be used alone, or two or more of the isocyanate crosslinking agents may be used in combination. The total content of the isocyanate compound crosslinking agent(s) is preferably from 0.01 to 2 parts by weight, more preferably from 0.05 to 1 part by weight, based on 100 parts by weight of the (meth)acrylic polymer. The content may be appropriately determined taking into account cohesive strength, prevention of delamination in a durability test, or the like.

When an aqueous dispersion of a modified acrylic polymer produced by emulsion polymerization is used, the isocyanate crosslinking agent does not have to be used. If necessary, a blocked isocyanate crosslinking agent may also be used, because the isocyanate crosslinking agent itself is susceptible to reacting with water.

Any peroxide crosslinking agent capable of producing active radical species by heating and promoting the crosslinking of the base polymer in the pressure-sensitive adhesive composition may be appropriately used. In view of workability or stability, a peroxide with a one-minute half-life temperature of 80°C to 160°C is preferably used, and a peroxide with a one-minute half-life temperature of 90°C to 140°C is more preferably used.

Examples of peroxides that may be used include di(2-ethylhexyl) peroxydicarbonate (one-minute half-life temperature: 90.6°C), di(4-tert-butylcyclohexyl) peroxydicarbonate (one-minute half-life temperature: 92.1°C), di-sec-butyl peroxydicarbonate (one-minute half-life temperature: 92.4°C), tert-butyl peroxyneodecanoate (one-minute half-life temperature: 103.5°C), tert-hexyl peroxypivalate (one-minute half-life temperature: 109.1°C), tert-butyl peroxypivalate (one-minute half-life temperature: 110.3°C), dilauroyl peroxide (one-minute half-life temperature: 116.4°C), di-n-octanoylperoxide (one-minute half-life temperature: 117.4°C), 1,1,3,3-tetramethylbutylperoxy-2-ethyl hexanoate (one-minute half-life temperature: 124.3°C), di(4-methylbenzoyl) peroxide (one-minute half-life temperature: 128.2°C), dibenzoyl peroxide (one-minute half-life temperature: 130.0°C), tert-butyl peroxyisobutylate (one-minute half-life temperature: 136.1°C), and 1,1-di(tert-hexylperoxy)cyclohexane (one-minute half-life temperature: 149.2°C). In particular, di(4-tert-butylcyclohexyl) peroxydicarbonate (one-minute half-life temperature: 92.1°C), dilauroyl peroxide (one-minute half-life temperature: 116.4°C), dibenzoyl peroxide (one-minute half-life temperature: 130.0°C), or the like is preferably used, because they can provide high crosslinking reaction efficiency.

The half life of the peroxide is an indicator of how fast the peroxide can be decomposed and refers to the time required for the remaining amount of the peroxide to reach one half of the original amount. The decomposition temperature required for a certain half life and the half life time obtained at a certain temperature are shown in catalogs furnished by manufacturers, such as "Organic Peroxide Catalog, 9th Edition, May, 2003" furnished by NOF CORPORATION.

One of the peroxides may be used alone, or two or more of the peroxides may be used in combination. The total content of the peroxide(s) should be from 0.02 to 2 parts by weight, preferably from 0.05 to 1 part by weight, based on 100 parts by weight of the (meth)acrylic polymer. The content may be appropriately selected within this range so that workability, re-workability, crosslink stability, peelability, or the like can be controlled.

The amount of decomposition of the peroxide may be determined by measuring the peroxide residue after the reaction process by high performance liquid chromatography (HPLC).

More specifically, for example, after the reaction process, about 0.2 g of each pressure-sensitive adhesive composition is taken out and immersed in 10 ml of ethyl acetate and subjected to shaking extraction at 25°C and 120 rpm for 3 hours in a shaker and then allowed to stand at room temperature for 3 days. Thereafter, 10 ml of acetonitrile is added, and the mixture is shaken at 25°C and 120 rpm for 30 minutes. About 10 µl of the liquid extract obtained by filtration through a membrane filter (0.45 µm) is subjected to HPLC by injection and analyzed so that the amount of the peroxide after the reaction process is determined.

An organic crosslinking agent or a polyfunctional metal chelate may also be used together as the crosslinking agent. The organic crosslinking agent may be an epoxy crosslinking agent (which is intended to include a compound having two or more epoxy groups per molecule). Examples of such an epoxy crosslinking agent include ethylene glycol diglycidyl ether, propylene glycol diglycidyl ether, terephthalic acid diglycidyl ester acrylate, and spiroglycol diglycidyl ether. These may be used alone or in combination of two or more thereof.

The polyfunctional metal chelate is composed of an organic compound and a polyvalent metal that is covalently or coordinately bonded to the organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. The organic compound has a covalent or coordinate bond-forming atom such as an oxygen atom. Examples of the organic compound include alkyl esters, alcohol compounds, carboxylic acid compounds, ether compounds, and ketone compounds.

When crosslinking is performed using active energy rays, a photo-initiator capable of producing radicals upon ultraviolet irradiation may be added, or if necessary, a polyfunctional monomer may be added. A photopolymerization initiator such as 1-hydroxy-cyclohexyl-phenyl ketone, 2,2-dimethoxy-1,2-diphenylethane-1-one, 2-hydroxy-2-methyl-1-phenyl-propane-1-one, or 2-methyl-1-(4-methylthio)phenyl-2-morpholinopropane-1-one may be used as the photo-initiator. Examples of such a polyfunctional monomer include diethylene glycol diacrylate, diethylene glycol dimethacrylate, ethylene glycol diacrylate, ethylene glycol dimethacrylate, tetraethylene glycol diacrylate, tetraethylene glycol dimethacrylate, neopentylglycol diacrylate, neopentylglycol dimethacrylate, 1,6-hexanediol diacrylate, 6-hexanediol dimethacrylate, trimethylolpropane triacrylate, trimethylolpropane trimethacrylate, pentaerythritol triacrylate, pentaerythritol trimethacrylate, dipentaerythritol hexaacrylate, and dipentaerythritol hexamethacrylate.

When a pressure-sensitive adhesive layer is formed using the crosslinking agent(s), the total content of the crosslinking agent(s) should be controlled, and the effect of the crosslinking temperature or the crosslinking time should be fully taken into account.

In the process of forming the pressure-sensitive adhesive layer, the content of the crosslinking agent is preferably controlled so that the crosslinked pressure-sensitive adhesive layer can have a gel fraction of 40 to 90% by weight, more preferably 50 to 85% by weight. Such a gel fraction is preferably achieved using the peroxide, the isocyanate crosslinking agent, or a combination thereof. A low gel fraction may lead to low cohesive strength, while a too high gel fraction may lead to low adhesive strength. The degree of crosslinking is more preferably from 10 to 75%, when the gel fraction in the case of the peroxide alone is measured.

The gel fraction may be controlled to a specific value by controlling the amount of the isocyanate crosslinking agent or any other crosslinking agent in consideration of the conditions such as the crosslinking temperature and the crosslinking time.

In a typical example using the peroxide, the crosslinking temperature or the crosslinking time is controlled so that the peroxide can be decomposed by 50% by weight or more, preferably 60% by weight or more. If the amount of decomposition of the peroxide is too small, a large amount of the remaining peroxide may undesirably cause a crosslinking reaction over time.

More specifically, for example, when the crosslinking process is performed at a one-minute half-life temperature, the peroxide is decomposed by 50% by weight in one minute, by 75% by weight in two minutes, and therefore, the heat treatment should be performed for one minute or more. When the peroxide has a half life of 30 seconds at the crosslinking temperature, the crosslinking process should be performed for 30 seconds or more. When the peroxide has a half life of 5 minutes at the crosslinking temperature, the crosslinking process should be performed for 5 minutes or more.

Therefore, the crosslinking temperature or the crosslinking time may be calculated from the half life of the peroxide to be used, assuming that linear proportionality is established with respect to the peroxide. In order to prevent a side reaction, however, the heat treatment should be performed at up to 170°C or less. Of course, the drying temperature may be still used as the heat treatment temperature, or the heat treatment may be performed after drying. The treatment time may be from 0.2 to 20 minutes, preferably from 0.5 to 10 minutes, while it is determined taking into account of productivity or workability.

The pressure-sensitive adhesive obtained as described above causes very little increase in adhesive strength after it is applied to the object, and is characterized in that it can easily be peeled off again without adhesive deposit even after it is attached to the object for a long time.

In particular, the pressure-sensitive adhesive layer for use in optical components preferably has a haze of 20% or less. If the haze is more than 20%, the pressure-sensitive adhesive layer placed in an optical component may significantly reduce the transparency, which is not preferred. The haze of the pressure-sensitive adhesive layer according to the invention is generally, but not limited to, 20% or less. A haze of 20% or less means that the resulting pressure-sensitive adhesive layer is free from cloudiness even though the metal-based fine particles are added and that the metal-based fine particles are uniformly dispersed in it. Thus, the pressure-sensitive adhesive of the invention does not increase the haze and hardly reduces the transparency.

When the pressure-sensitive adhesive composition of the invention or a pressure-sensitive adhesive sheet having the pressure-sensitive adhesive layer of the invention is applied to a hydrophilic object such as a glass material, 0.01 to 1 part by weight, preferably 0.02 to 0.6 part by weight of a silane coupling agent may be added to improve the water resistance at the interface, based on 100 parts by weight of the acrylic polymer. If the amount is too large, the adhesive strength to liquid crystal cells may increase so that the re-peelability can be degraded. If the amount is too small, the durability may be undesirably reduced.

Examples of silane coupling agents that may preferably be used include epoxy group-containing silane coupling agents such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acrylic group-containing silane coupling agents such as 3-acryloxypropyltrimethoxysilane and 3-methacryloxypropyltriethoxysilane; and isocyanate group-containing silane coupling agents such as 3-isocyanatepropyltriethoxysilane.

The pressure-sensitive adhesive composition of the present invention may also contain any other known additive. For example, a powder such as a colorant and a pigment, a dye, a surfactant, a plasticizer, a tackifier, a surface lubricant, a leveling agent, a softening agent, an antioxidant, an age resister, a light stabilizer, an ultraviolet absorbing agent, a polymerization inhibitor, an inorganic or organic filler, a metal powder, or a particle-or foil-shaped material may be added as appropriate depending on the intended use. A redox system including an added reducing agent may also be used in the controllable range.

The pressure-sensitive sheet of the present invention includes an support such as optical member and a pressure-sensitive adhesive layer that is formed from the pressure-sensitive adhesive on at least one side of the optical member.

For example, the pressure-sensitive adhesive layer may be formed by a method that includes applying the pressure-sensitive adhesive composition to a release-treated separator or the like, removing polymerization solvents and so on by drying and curing the composition to form a pressure-sensitive adhesive layer, and then transferring the pressure-sensitive adhesive layer onto an optical film. Alternatively, the pressure-sensitive adhesive layer may be formed by a method that includes directly applying the pressure-sensitive adhesive composition to an optical film serving as the base material and removing polymerization solvents and so on by drying and curing the composition to form a pressure-sensitive adhesive layer on the optical film. Before the pressure-sensitive adhesive is applied, one or more optional solvents other than the polymerization solvents may be further added to the pressure-sensitive adhesive.

A silicone peeling off liner is preferably used as the release-treated separator. The adhesive composition of the invention may be applied to such a liner and dried to form a pressure-sensitive adhesive layer. In this process, any appropriate method may be used for drying the pressure-sensitive adhesive, depending on the purpose. A method of heating and drying the coating film is preferably used. The heating and drying temperature is preferably from 40°C to 200°C, more preferably from 50°C to 180°C, particularly preferably from 70°C to 170°C. When the heating temperature is set within the range, a pressure-sensitive adhesive with a high level of adhesive properties can be obtained.

Any appropriate drying time may be used as needed. The drying time is preferably from 5 seconds to 20 minutes, more preferably from 5 seconds to 10 minutes, particularly preferably from 10 seconds to 5 minutes.

The surface of the optical member may also be coated with an anchor layer or subjected to any adhesion-facilitating treatment such as corona treatment or plasma treatment, before the pressure-sensitive adhesive layer is formed. The surface of the pressure-sensitive adhesive layer may also be subjected to adhesion-facilitating treatment.

Various methods may be used to form the pressure-sensitive adhesive layer. Examples of such methods include roll coating, kiss roll coating, gravure coating, reverse coating, roll brush coating, spray coating, dip roll coating, bar coating, knife coating, air knife coating, curtain coating, lip coating, and extrusion coating with a die coater or the like.

The thickness of the pressure-sensitive adhesive layer is not limited, but for example, from about 1 to 100 µm, preferably from 2 to 50 µm, more preferably from 2 to 40 µm, still more preferably from 5 to 35 µm.

When the pressure-sensitive adhesive layer is exposed, the pressure-sensitive adhesive layer may be protected with a sheet having undergone release treatment (a separator) before practical use.

Examples of the material for forming the separator include a plastic film such as a polyethylene, polypropylene, polyethylene terephthalate, or polyester film, a porous material such as paper, cloth and nonwoven fabric, and an appropriate thin material such as a net, a foamed sheet, a metal foil, and a laminate thereof. In particular, a plastic film is preferably used, because of its good surface smoothness.

The plastic film may be any film capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

The thickness of the separator is generally from about 5 to about 200 µm, preferably from about 5 to about 100 µm. If necessary, the separator may be treated with a release agent such as a silicone, fluorine, long-chain alkyl, or fatty acid amide release agent, or may be subjected to release and antifouling treatment with silica powder or to antistatic treatment of coating type, kneading and mixing type, vapor-deposition type, or the like. In particular, if the surface of the separator is appropriately subjected to release treatment such as silicone treatment, long-chain alkyl treatment, and fluorine treatment, the releasability from the pressure-sensitive adhesive layer can be further increased.

In the above production method, the release-treated sheet may be used without modification as a separator for the pressure-sensitive adhesive sheet, the pressure-sensitive adhesive optical member or the like, so that the process can be simplified.

The optical film may be of any type for use in forming image displays such as liquid crystal displays. For example, a polarizing plate is exemplified as the optical film. A polarizing plate including a polarizer and a transparent protective film provided on one or both sides of the polarizer is generally used.

A polarizer is not limited especially but various kinds of polarizer may be used.
As a polarizer, for example, a film that is uniaxially stretched after having dichromatic substances, such as iodine and dichromatic dye, absorbed to hydrophilic high molecular weight polymer films, such as polyvinyl alcohol type film, partially formalized polyvinyl alcohol type film, and ethylene-vinyl acetate copolymer type partially saponified film; poly-ene type alignment films, such as dehydrated polyvinyl alcohol and dehydrochlorinated polyvinyl chloride, etc. may be mentioned. In these, a polyvinyl alcohol type film on which dichromatic materials such as iodine, is absorbed and aligned after stretched is suitably used. Although thickness of polarizer is not especially limited, the thickness of about 5 to 80 µm is commonly adopted.

A polarizer that is uniaxially stretched after a polyvinyl alcohol type film dyed with iodine is obtained by stretching a polyvinyl alcohol film by 3 to 7 times the original length, after dipped and dyed in aqueous solution of iodine. If needed the film may also be dipped in aqueous solutions, such as boric acid and potassium iodide, which may include zinc sulfate, zinc chloride. Furthermore, before dyeing, the polyvinyl alcohol type film may be dipped in water and rinsed if needed. By rinsing polyvinyl alcohol type film with water, effect of preventing ununiformity, such as unevenness of dyeing, is expected by making polyvinyl alcohol type film swelled in addition that also soils and blocking inhibitors on the polyvinyl alcohol type film surface may be washed off. Stretching may be applied after dyed with iodine or may be applied concurrently, or conversely dyeing with iodine may be applied after stretching. Stretching is applicable in aqueous solutions, such as boric acid and potassium iodide, and in water bath.

For example, a polarizing plate is exemplified as the optical film. A polarizing plate including a polarizer and a transparent protective film provided on one or both sides of the polarizer is generally used.

A thermoplastic resin with a high level of transparency, mechanical strength, thermal stability, moisture blocking properties, isotropy, and the like may be used as a material for forming the transparent protective film. Examples of such a thermoplastic resin include cellulose resins such as triacetylcellulose, polyester resins, polyethersulfone resins, polysulfone resins, polycarbonate resins, polyamide resins, polyimide resins, polyolefin resins, (meth)acrylic resins, cyclic olefin polymer resins (norbornene resins), polyarylate resins, polystyrene resins, polyvinyl alcohol resins, and any mixture thereof. The transparent protective film is generally laminated to one side of the polarizer with the adhesive layer, but thermosetting resins or ultraviolet curing resins such as (meth)acrylic, urethane, acrylic urethane, epoxy, or silicone resins may be used to other side of the polarizer for the transparent protective film. The transparent protective film may also contain at least one type of any appropriate additive. Examples of the additive include an ultraviolet absorbing agent, an antioxidant, a lubricant, a plasticizer, a release agent, an anti-discoloration agent, a flame retardant, a nucleating agent, an antistatic agent, a pigment, and a colorant. The content of the thermoplastic resin in the transparent protective film is preferably from 50 to 100% by weight, more preferably from 50 to 99% by weight, still more preferably from 60 to 98% by weight, particularly preferably from 70 to 97% by weight. If the content of the thermoplastic resin in the transparent protective film is 50% by weight or less, high transparency and other properties inherent in the thermoplastic resin can fail to be sufficiently exhibited.

Moreover, as is described in JP-A No. 2001-343529 (WO 01/37007), polymer films, for example, resin compositions including (A) thermoplastic resins having substituted and/or non-substituted imido group in sidechain, and (B) thermoplastic resins having substituted and/or non-substituted phenyl and nitrile group in sidechain may be mentioned. As an illustrative example, a film may be mentioned that is made of a resin composition including alternating copolymer comprising iso-butylene and N-methyl maleimide, and acrylonitrile-styrene copolymer. A film comprising mixture extruded article of resin compositions etc. may be used. Since the films are less in retardation and less in photoelastic coefficient, faults such as unevenness due to a strain in a polarizing plate can be removed and besides, since they are less in moisture permeability, they are excellent in durability under humidified environment.

Thickness of the transparent protective film can be properly determined and generally in the range of from about 1 to 500 µm from the viewpoint of a strength, workability such as handlability, requirement for a thin film and the like. Especially, the thickness is preferably in the range of from 1 to 300 µm and more preferably in the range of from 5 to 200 µm. Therefore, it is particularly preferred that the transparent protective film has a thickness of 5 to 150 µm.

Note that in a case where the transparent protective films are provided on both sides of a polarizer, the protective films made from the same polymer may be used on both sides thereof or alternatively, the protective films made from polymer materials different from each other may also be used on respective both sides thereof.

At least one selected from a cellulose resin, a polycarbonate resin, a cyclic polyolefin resin, and a (meth)acrylic resin is preferably used for the transparent protective film according to the present invention.

The cellulose resin is an ester of cellulose and a fatty acid. Examples of such a cellulose ester resin include triacetyl cellulose, diacetyl cellulose, tripropionyl cellulose, dipropionyl cellulose, and the like. In particular, triacetyl cellulose is preferred. Much commercially available triacetyl celluloses are placing on sale and are advantageous in view of easy availability and cost. Examples of commercially available products of triacetyl cellulose include UV-50, UV-80, SH-80, TD-80U, TD-TAC, and UZ-TAC (trade names) manufactured by Fujifilm Corporation, and KC series manufactured by Konica Minolta. In general, these triacetyl cellulose products have a thickness direction retardation (Rth) of about 60 nm or less, while having an in-plane retardation (Re) of almost zero.

Cellulose resin films with relatively small thickness direction retardation may be obtained by processing any of the above cellulose resins. Examples of the processing method include a method that includes laminating a general cellulose-based film to a base film such as a polyethylene terephthalate, polypropylene, or stainless steel film, coated with a solvent such as cyclopentanone or methyl ethyl ketone, drying the laminate by heating (for example, at 80 to 150°C for 3 to 10 minutes) and then separating the base film; and a method that includes coating a general cellulose resin film with a solution of a norbornene resin, a (meth)acrylic resin or the like in a solvent such as cyclopentanone or methyl ethyl ketone, drying the coated film by heating (for example, at 80 to 150°C for 3 to 10 minutes), and then separating the coating.

The cellulose resin film with a relatively small thickness direction retardation to be used may be a fatty acid cellulose resin film with a controlled degree of fat substitution. While triacetyl cellulose for general use has a degree of acetic acid substitution of about 2.8, preferably, the degree of acetic acid substitution is controlled to 1.8 to 2.7, so that the Rth can be reduced. The Rth may also be controlled to be low by adding a plasticizer such as dibutyl phthalate, p-toluenesulfonanilide, and acetyl triethyl citrate, to the fatty acid-substituted cellulose resin. The plasticizer is preferably added in amount of 40 parts by weight or less, more preferably of 1 to 20 parts by weight, still more preferably of 1 to 15 parts by weight, to 100 parts by weight of the fatty acid cellulose resin.

For example, the cyclic polyolefin resin is preferably a norbornene resin. Cyclic olefin resin is a generic name for resins produced by polymerization of cyclic olefin used as a polymerizable unit, and examples thereof include the resins disclosed in JP-A Nos. 01-240517, 03-14882, and 03-122137. Specific examples thereof include ring-opened (co)polymers of cyclic olefins, addition polymers of cyclic olefins, copolymers (typically random copolymers) of cyclic olefins and α-olefins such as ethylene and propylene, graft polymers produced by modification thereof with unsaturated carboxylic acids or derivatives thereof, and hydrides thereof. Examples of the cyclic olefin include norbornene monomers.

Various commercially available cyclic polyolefin resins are placing on sale. Examples thereof include Zeonex (trade name) and Zeonor (trade name) series manufactured by Zeon Corporation, Arton (trade name) series manufactured by JSR Corporation, Topas (trade name) series manufactured by Ticona, and Apel (trade name) series manufactured by Mitsui Chemicals, Inc.

The (meth)acrylic resin preferably has a glass transition temperature (Tg) of 115°C or more, more preferably of 120°C or more, still more preferably of 125°C or more, particularly preferably of 130°C or more. If the Tg is 115°C or more, the resulting polarizing plate can have good durability. The upper limit to the Tg of the (meth)acrylic resin is preferably, but not limited to, 170°C or less, in view of formability and the like. The (meth)acrylic resin can form a film with an in-plane retardation (Re) of almost zero and a thickness direction retardation (Rth) of almost zero.

Any appropriate (meth)acrylic resin may be used as long as the advantages of the present invention are not reduced. Examples of such a (meth)acrylic resin include poly(meth)acrylate such as poly(methyl methacrylate), methyl methacrylate-(meth)acrylic acid copolymers, methyl methacrylate-(meth)acrylate copolymers, methyl methacrylate-acrylate-(meth)acrylic acid copolymers, methyl (meth)acrylate-styrene copolymers (such as MS resins), and alicyclic hydrocarbon group-containing polymers (such as methyl methacrylate-cyclohexyl methacrylate copolymers and methyl methacrylate-norbornyl (meth)acrylate copolymers). Poly(C₁₋₆ alkyl (meth)acrylate) such as poly(methyl (meth)acrylate) is preferred, and a methyl methacrylate-based resin mainly composed of a methyl methacrylate unit (50 to 100% by weight, preferably 70 to 100% by weight) is more preferred.

Examples of the (meth)acrylic resin include Acrypet VH and Acrypet VRL20A each manufactured by Mitsubishi Rayon Co., Ltd., (meth)acrylic resins having a ring structure in their molecule as disclosed in JP-A No. 2004-70296, and high-Tg (meth)acrylic resins produced by intramolecular crosslinking or intramolecular cyclization reaction.

Lactone ring structure-containing (meth)acrylic resins may also be used, because they have high heat resistance and high transparency and also have high mechanical strength after biaxially stretched.

Examples of the lactone ring structure-containing (meth)acrylic reins include the lactone ring structure-containing (meth)acrylic reins disclosed in JP-A Nos. 2000-230016, 2001-151814, 2002-120326, 2002-254544, and 2005-146084.

The lactone ring structure-containing (meth)acrylic reins preferably have a ring structure represented by Formula (I):

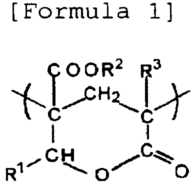

wherein R¹, R² and R³ each independently represent a hydrogen atom or an organic residue of 1 to 20 carbon atoms. The organic residue may contain an oxygen atom(s).

The content of the lactone ring structure represented by Formula (I) in the lactone ring structure-containing (meth)acrylic resin is preferably from 5 to 90% by weight, more preferably from 10 to 70% by weight, still more preferably from 10 to 60% by weight, particularly preferably from 10 to 50% by weight. If the content of the lactone ring structure represented by Formula (I) in the lactone ring structure-containing (meth)acrylic resin is less than 5% by weight, its heat resistance, solvent resistance or surface hardness can be insufficient. If the content of the lactone ring structure represented by Formula (I) in the lactone ring structure-containing (meth)acrylic resin is more than 90% by weight, its formability or workability can be poor.

The lactone ring structure-containing (meth)acrylic resin preferably has a mass average molecular weight (also referred to as weight average molecular weight) of 1,000 to 2,000,000, more preferably of 5,000 to 1,000,000, still more preferably of 10,000 to 500,000, particularly preferably of 50,000 to 500,000. A mass average molecular weight outside the above range is not preferred in view of formability or workability.

The lactone ring structure-containing (meth)acrylic resin preferably has a Tg of 115°C or more, more preferably of 120°C or more, still more preferably of 125°C or more, particularly preferably of 130°C or more. For example, the resin with a Tg of 115°C or more can produce good durability, when it is incorporated in the form of a transparent protective film in a polarizing plate. The upper limit to the Tg of the lactone ring structure-containing (meth)acrylic resin is preferably, but not limited to, 170°C or less in view of formability and the like.

The total light transmittance of the lactone ring structure-containing (meth)acrylic resin, which may be measured according to ASTM-D-1003 with respect to injection molded products, is preferably as high as possible, and specifically, it is preferably 85% or more, more preferably 88% or more, still more preferably 90% or more. The total light transmittance is an index of transparency, and a total light transmittance of less than 85% can result in reduced transparency.

The transparent protective film may be subjected to surface modification treatment before it is applied with the adhesive to improve adhesiveness to polarizer. Specific examples of such treatment include corona treatment, plasma treatment, ozone treatment, flame treatment, primer treatment, glow treatment, saponification treatment, and coupling agent treatment.

A hard coat layer may be prepared, or antireflection processing, processing aiming at sticking prevention, diffusion or anti glare may be performed onto the face on which the polarizing film of the above described transparent protective film has not been adhered.

Further an optical film of the present invention may be used as other optical layers, such as a reflective plate, a anti-transflective plate, a retardation plate (a half wavelength plate and a quarter wavelength plate included), and a viewing angle compensation film, which may be used for formation of a liquid crystal display etc.. These are used in practice as an optical film, or as one layer or two layers or more of optical layers laminated with polarizing plate.

The pressure-sensitive adhesive optical film of the present invention is preferably used to form various types of image displays such as liquid crystal displays. Liquid crystal displays may be formed according to conventional techniques. Specifically, liquid crystal displays are generally formed by appropriately assembling a liquid crystal cell and the pressure-sensitive adhesive optical film and optionally other component such as a lighting system and incorporating a driving circuit according to any conventional technique, except that the pressure-sensitive adhesive optical film of the present invention is used. Any type of liquid crystal cell may also be used such as a TN type, an STN type, a n type a VA type and IPS type.

Suitable liquid crystal displays, such as liquid crystal display with which the pressure-sensitive adhesive optical film has been located at one side or both sides of the liquid crystal cell, and with which a backlight or a reflective plate is used for a lighting system may be manufactured. In this case, the optical film may be installed in one side or both sides of the liquid crystal cell. When installing the optical films in both sides, they may be of the same type or of different type. Furthermore, in assembling a liquid crystal display, suitable parts, such as diffusion plate, anti-glare layer, antireflection film, protective plate, prism array, lens array sheet, optical diffusion plate, and backlight, may be installed in suitable position in one layer or two or more layers.

### EXAMPLES

The invention is more specifically described by the examples below. In each example, parts and % are all by weight. Unless otherwise stated below, the conditions of room temperature standing are 23°C and 65%RH (for 1 hour or 1 week) in all the cases. The evaluation items in the examples and so on were measured as described below.

Measurement of Weight Average Molecular Weight
The weight average molecular weight of the resulting (meth)acrylic polymer was measured by gel permeation chromatography (GPC) under the conditions shown below. The sample was dissolved in tetrahydrofuran to form a 0.1% by weight solution. The solution was allowed to stand overnight and then filtered through a 0.45 µm membrane filter. The resulting filtrate was used for the measurement.
Analyzer: HLC-8120GPC manufactured by TOSOH CORPORATION
Columns: G7000H_{XL}+GMH_{XL}+GMH_{XL} manufactured by TOSOH CORPORATION
Column size: each 7.8 mmφ x 30 cm, 90 cm in total
Eluent: tetrahydrofuran (0.1% by weight in concentration)
Flow rate: 0.8 ml/minute
Detector: differential refractometer (RI)
Column temperature: 40°C
Injection volume: 100 µl
Detector: differential refractometer
Standard sample: polystyrene

### Measurement of Gel Fraction

The dried and crosslinked pressure-sensitive adhesive (with an initial weight W1) was immersed and stored in an ethyl acetate solution at room temperature for 1 week. The insoluble matter was then taken out and measured for dry weight (W2). The gel fraction was determined according to the following formula: Gel fraction=(W2/W1)x100.

### Example 1

### Preparation of Acrylic Polymer

Into a four-neck flask equipped with a stirring blade, a thermometer, a nitrogen gas introducing tube, and a condenser were charged 99.5 parts by weight of n-butyl acrylate, 0.5 part by weight of 4-hydroxybutyl acrylate, 0.1 part by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 15 hours, while the temperature of the liquid in the flask was kept at about 55°C, so that a solution of an acrylic polymer with a weight average molecular weight of 1,800,000 was prepared. The resulting polymer had a glass transition temperature of 219 K.

Ten parts by weight of a silicone compound (KR-9706 manufactured by Shin-Etsu Chemical Co., Ltd.) was added to 100 parts by weight of titanium oxide (TTO-51C manufactured by ISHIHARA SANGYO KAISHA, LTD.). In a bead mill (ULTRA APEX MILL manufactured by KOTOBUKI INDUSTRIES CO., LTD.), the mixture was treated with 330 parts by weight of methyl ethyl ketone as a dispersion medium for 2 hours, so that a 70 nm titania dispersion was obtained.

Based on 100 parts by weight of the polymer solids in the resulting pressure-sensitive adhesive polymer solution, 10 parts by weight (in terms of solids) of the titania dispersion and 80 parts by weight of a low-molecular-weight styrene polymer (SX-85 manufactured by YASUHARA CHEMICAL CO., LTD., Mw 1,380) dissolved in toluene were added to the pressure-sensitive adhesive polymer solution, and 0.15 part by weight of a trimethylolpropane adduct of hexamethylenediisocyanate (CORONATE HL, manufactured by NIPPON POLYURETHANE INDUSTRY CO., LTD.) was further added thereto. The resulting composition was then applied to one side of a 25 µm, silicone-treated, polyethylene terephthalate (PET) film (manufactured by TORAY INDUSTRIES, INC.) so as to form a pressure-sensitive adhesive layer with a dry thickness of 20 µm, and dried at 120°C for 3 minutes to form a pressure-sensitive adhesive layer, so that a pressure-sensitive adhesive sheet was obtained.

### Example 2

### Preparation of Acrylic Polymer

The acrylic polymer solution obtained in Example 1 was diluted to 25% with ethyl acetate. A mixture of 400 parts by weight of the resulting solution, 50 parts by weight of styrene and 0.2 part by weight of benzoyl peroxide was charged into a four-neck flask equipped with a nitrogen gas introducing tube and a condenser. After the air was sufficiently replaced with nitrogen, the mixture was subjected to a polymerization reaction at 65°C for 6 hours and at 70°C for 6 hours with stirring under a nitrogen stream, so that a graft polymer was obtained. The graft part of the polymer had a glass transition temperature of 373 K.

Based on 100 parts by weight of the polymer solids in the resulting graft polymer solution, 10 parts by weight (in terms of solids) of the same titania dispersion as used in Example 1 and 80 parts by weight of a low-molecular-weight styrene polymer (SX-85 manufactured by YASUHARA CHEMICAL CO., LTD., Mw 1,380) dissolved in toluene were added to the graft polymer solution, and 0.1 part by weight of a trimethylolpropane adduct of tolylenediisocyanate (CORONATE L, manufactured by NIPPON POLYURETHANE INDUSTRY CO., LTD.) was further added thereto. The resulting composition was then applied to one side of a 25 µm, silicone-treated, polyethylene terephthalate (PET) film (manufactured by TORAY INDUSTRIES, INC.) so as to form a pressure-sensitive adhesive layer with a dry thickness of 20 µm, and dried at 120°C for 3 minutes to form a pressure-sensitive adhesive layer, so that a pressure-sensitive adhesive sheet was obtained.

### Example 3

A pressure-sensitive adhesive sheet was prepared in the same manner as in Example 2, except that the amount of the solids of the titania dispersion was changed to 30 parts by weight.

### Example 4

### Preparation of Acrylic Polymer

Into a four-neck flask equipped with a stirring blade, a thermometer, a nitrogen gas introducing tube, and a condenser were charged 83 parts by weight of n-butyl acrylate, 15 parts by weight of 2-ethylhexyl acrylate, 2 parts by weight of 4-hydroxybutyl acrylate, 0.1 part by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 15 hours, while the temperature of the liquid in the flask was kept at about 55°C, so that a solution of an acrylic polymer with a weight average molecular weight of 1,840,000 was prepared. The resulting polymer had a glass transition temperature of 221 K.

Into a four-neck flask equipped with a mechanical stirrer, a nitrogen gas introducing tube, a condenser, and a rubber septum were charged 50 g (478 mmol) of styrene and then 1.872 g (12 mmol) of 2,2'-bipyridine, and the air in the system was replaced with nitrogen. Under a nitrogen stream, 0.715 g (5 mmol) of copper bromide was added thereto, and the reaction system was heated to 90°C. Polymerization was started by adding 5.85 mg (30 mmol) of ethyl 2-bromoisobutyrate as a polymerization initiator, and the polymerization was performed at 90°C for 8 hours under a nitrogen stream without adding any solvent. The resulting polymerization product was diluted to about 20% by weight with ethyl acetate, and the catalyst was removed by filtration. Finally, ethyl acetate was removed by distillation, and heating (60°C) was performed under reduced pressure, so that a low-molecular-weight styrene polymer (Mw: 1,750) was obtained. The resulting polymer had a glass transition temperature of 330 K.

Based on 100 parts by weight of the polymer solids in the resulting pressure-sensitive adhesive polymer solution, 10 parts by weight (in terms of solids) of a zirconia dispersion (NZD-3JF95-E manufactured by SUMITOMO OSAKA CEMENT Co., Ltd., 9 nm) and 80 parts by weight of the low-molecular-weight styrene polymer (Mw 1,750) dissolved in toluene were added to the pressure-sensitive adhesive polymer solution, and 0.05 part by weight of a trimethylolpropane adduct of hexamethylenediisocyanate (CORONATE HL, manufactured by NIPPON POLYURETHANE INDUSTRY CO., LTD.) and then 0.2 part by weight of benzoyl peroxide were further added thereto. The resulting composition was then applied to one side of a 25 µm, silicone-treated, polyethylene terephthalate (PET) film (manufactured by TORAY INDUSTRIES, INC.) so as to form a pressure-sensitive adhesive layer with a dry thickness of 20 µm, and dried at 150°C for 3 minutes to form a pressure-sensitive adhesive layer, so that a pressure-sensitive adhesive sheet was obtained.

### Example 5

The acrylic polymer solution obtained in Example 4 was diluted to 25% with ethyl acetate. A mixture of 400 parts by weight of the resulting solution, 50 parts by weight of styrene, 2 parts by weight of 4-hydroxybutyl acrylate, and 0.2 part by weight of benzoyl peroxide was charged into a four-neck flask equipped with a nitrogen gas introducing tube and a condenser. After the air was sufficiently replaced with nitrogen, the mixture was subjected to a polymerization reaction at 65°C for 6 hours and at 70°C for 6 hours with stirring under a nitrogen stream, so that a graft polymer was obtained. The graft part had a glass transition temperature of 367 K.

Based on 100 parts by weight of the polymer solids in the resulting graft polymer solution, 10 parts by weight (in terms of solids) of the same zirconia dispersion as used in Example 4 and 80 parts by weight of the low-molecular-weight styrene polymer (Mw 1,750) dissolved in toluene were added to the graft polymer solution, and 0.05 part by weight of a trimethylolpropane adduct of hexamethylenediisocyanate (CORONATE HL, manufactured by NIPPON POLYURETHANE INDUSTRY CO., LTD.) and 0.2 part by weight of benzoyl peroxide were further added thereto. The resulting composition was then applied to one side of a 25 µm, silicone-treated, polyethylene terephthalate (PET) film (manufactured by TORAY INDUSTRIES, INC.) so as to form a pressure-sensitive adhesive layer with a dry thickness of 20 µm, and dried at 150°C for 3 minutes to form a pressure-sensitive adhesive layer, so that a pressure-sensitive adhesive sheet was obtained.

### Comparative Example 1

A pressure-sensitive adhesive sheet of Comparative Example 1 was obtained by performing the same operation as in Example 1, except that the low-molecular-weight styrene polymer was not added.

### Comparative Example 2

A pressure-sensitive adhesive sheet of Comparative Example 2 was obtained by performing the same operation as in Example 2, except that the low-molecular-weight styrene polymer was not added.

### Comparative Example 3

A pressure-sensitive adhesive sheet of Comparative Example 3 was obtained by performing the same operation as in Example 1, except that the low-molecular-weight styrene polymer of Example 1 was replaced with a styrene polymer with a weight average molecular weight of 9,200 produced by polymerization of 100 parts by weight of styrene, 4 parts by weight of lauryl mercaptan and 0.1 part by weight of 2,2'-azobisisobutyronitrile.

### Comparative Example 4

A pressure-sensitive adhesive sheet of Comparative Example 4 was obtained by performing the same operation as in Example 4, except that the low-molecular-weight styrene polymer was not added.

The pressure-sensitive adhesive sheets (sample) obtained in the examples and the comparative examples were evaluated as described below. The results of the evaluation are shown in Table 1.

### Adhesive Strength

The sample obtained in each of the examples and the comparative examples was cut into an about 100 mm long, 20 mm wide piece. The sample piece was bonded to a 0.5 mm thick non-alkali glass plate (1737 manufactured by Corning Incorporated) by one reciprocation of a 2 kg roll. The sample piece was then autoclaved at 50°C and 0.5 MPa for 30 minutes, so that it was completely bonded. Thereafter, the sample piece was allowed to stand under the conditions of 23°C and a humidity of 50% for 3 hours and then measured for adhesive strength at a peel angle of 90° and a peel rate of 300 mm/minute.

### Holding Power

A 10 mm wide piece of the pressure-sensitive adhesive sheet sample obtained in each of the examples and the comparative examples was bonded to a bake plate with a bonding area of 10 x 20 mm. The pressure-sensitive adhesive sheet was stored at 60°C, while 500 g of a load was further applied to one side of the sheet. The time until the sample dropped off of the bake plate was measured and used as an index of heat resistance.

### Refractive Index

While sodium D line was applied to the sample obtained in each of the examples and the comparative examples in the atmosphere at 25°C, the refractive index was measured with an Abbe refractometer (DR-M2 manufactured by ATAGO CO., LTD.).

### Haze

A 10 mm wide piece of the pressure-sensitive adhesive sheet sample obtained in each of the examples and the comparative examples was used. The haze of the sample was measured at an atmosphere temperature of 25°C with a reflectance/transmittance meter HR-100 manufactured by MURAKAMI COLOR RESEARCH LABORATORY using D-65 light according to JIS K 7136.

**[Table 1]**

| | Haze | Gel fraction | Refractive index | Adhesive strength | Holding power |
|---|---|---|---|---|---|
| Example 1 | 14.6 | 48.5 | 1.54 | 4.6 | >120 |
| Example 2 | 7.7 | 49.2 | 1.55 | 4.4 | >120 |
| Comparative Example 1 | 38.4 | 72.5 | * | 3.4 | >120 |
| Comparative Example 2 | 40.9 | 74.8 | * | 3.8 | >120 |
| Comparative Example 3 | 72.7 | 47.2 | * | 2.1 | 50 |
| Example 3 | 8.0 | 45.5 | 1.57 | 4.1 | >120 |
| Example 4 | 1.8 | 47.9 | 1.54 | 5.2 | >120 |
| Example 5 | 1.3 | 48.6 | 1.55 | 4.9 | >120 |
| Comparative Example 4 | 51.5 | 67.7 | * | 3.2 | >120 |

| | | | | | |
|---|---|---|---|---|---|
| *: The haze was too high to be measured with the Abbe refractometer. | | | | | |

## Claims

1. A pressure-sensitive adhesive composition, comprising:
a (meth)acrylic polymer including as a monomer component 50% by weight or more of a (meth)acrylate represented by the formula CH₂=C(R₁)COOR₂, wherein R₁ represents hydrogen or a methyl group, and R₂ represents a substituted or unsubstituted alkyl group of 1 to 20 carbon atoms, having a weight average molecular weight of 500,000 to 3,000,000 as determined by gel permeation chromatography, and being substantially free of an acid component;
5 to 100 parts by weight of a low-molecular-weight aromatic polymer having a weight average molecular weight of 500 to 4,000 as determined by gel permeation chromatography, based on 100 parts by weight of the (meth)acrylic polymer; and
5 to 100 parts by weight of metal-based fine particles having an average particle size of 5 to 100 nm, based on 100 parts by weight of the (meth)acrylic polymer.

2. The pressure-sensitive adhesive composition of claim 1, wherein the (meth)acrylic polymer is a copolymer further including as a monomer component 0.05 to 10% by weight of a hydroxyl group-containing (meth)acrylate represented by the formula CH₂=C(R₁)COOCₙH₂ₙOH, wherein R₁ represents hydrogen or a methyl group, and n represents an integer of 1 to 10.

3. The pressure-sensitive adhesive composition of claim 1 or 2, further comprising 0.02 to 2 parts by weight of a crosslinking agent, based on 100 parts by weight of the (meth)acrylic polymer.

4. The pressure-sensitive adhesive composition of any one of claims 1 to 3, wherein the (meth)acrylic polymer is a graft polymer having a side chain containing a composition different from a backbone-forming main chain.

5. The pressure-sensitive adhesive composition of claim 4, wherein the main chain has a glass transition temperature of 250 K or less, and/or the side chain has a glass transition temperature of 300 K or more.

6. A pressure-sensitive adhesive layer obtained from the pressure-sensitive adhesive composition of any one of claims 1 to 5.

7. The pressure-sensitive adhesive layer of claim 6, which has a gel fraction of 40 to 90% by weight.

8. The pressure-sensitive adhesive layer of claim 6 or 7, which has a haze of 20% or less.

9. A pressure-sensitive adhesive sheet, comprising a support and the pressure-sensitive adhesive layer of any one of claims 6 to 8 formed on at least one side of the support.

## Patentansprüche

1. Haftklebezusammensetzung, umfassend:
ein (Meth)acrylpolymer, das als eine Monomerkomponente 50 Gew.-% oder mehr von einem (Meth)acrylat enthält, das durch die Formel CH₂=C(R₁)COOR₂ wiedergegeben ist, worin R₁ Wasserstoff oder eine Methylgruppe bedeutet und R₂ eine substituierte oder unsubstituierte Alkylgruppe mit 1 bis 20 Kohlenstoffatomen bedeutet, das ein gewichtsmittleres Molekulargewicht von 500000 bis 3000000, bestimmt durch Gelpermeationschromatografie, aufweist und das im Wesentlichen frei von einer Säurekomponente ist;
5 bis 100 Gewichtsteile von einem aromatischen Polymer mit niedrigem Molekulargewicht, das ein gewichtsmittleres Molekulargewicht von 500 bis 4000, bestimmt durch Gelpermeationschromatografie, aufweist, bezogen auf 100 Gewichtsteile von dem (Meth)acrylpolymer; und
5 bis 100 Gewichtsteile von feinen Teilchen auf Metallbasis mit einer mittleren Teilchengröße von 5 bis 100 nm, bezogen auf 100 Gewichtsteile von dem (Meth)acrylpolymer.

2. Haftklebezusammensetzung nach Anspruch 1, wobei das (Meth)acrylpolymer ein Copolymer ist, das außerdem als eine Monomerkomponente 0,05 bis 10 Gew.-% von einem eine Hydroxylgruppe enthaltenden (Meth)acrylat enthält, das durch die Formel CH₂=C(R₁)COOCₙH₂ₙOH wiedergegeben ist, worin R₁ Wasserstoff oder eine Methylgruppe bedeutet und n eine ganze Zahl von 1 bis 10 bedeutet.

3. Haftklebezusammensetzung nach Anspruch 1 oder 2, außerdem umfassend 0,02 bis 2 Gewichtsteile von einem Vernetzungsmittel, bezogen auf 100 Gewichtsteile von dem (Meth)acrylpolymer.

4. Haftklebezusammensetzung nach einem der Ansprüche 1 bis 3, wobei das (Meth)acrylpolymer ein Pfropfpolymer mit einer Seitenkette ist, die eine Zusammensetzung enthält, die von einer das Grundgerüst bildenden Hauptkette verschieden ist.

5. Haftklebezusammensetzung nach Anspruch 4, wobei die Hauptkette eine Glasübergangstemperatur von 250 K oder weniger aufweist und/oder die Seitenkette eine Glasübergangstemperatur von 300 K oder mehr aufweist.

6. Haftklebeschicht erhalten aus der Haftklebezusammensetzung nach einem der Ansprüche 1 bis 5.

7. Haftklebeschicht nach Anspruch 6, welche eine Gelfraktion von 40 bis 90 Gew.-% aufweist.

8. Haftklebeschicht nach Anspruch 6 oder 7, welche eine Trübung von 20 % oder weniger aufweist.

9. Haftklebefolie, umfassend einen Träger und die Haftklebeschicht nach einem der Ansprüche 6 bis 8, die auf wenigstens einer Seite des Trägers gebildet ist.

## Revendications

1. Composition adhésive sensible à la pression, comprenant :
un polymère (méth)acrylique comportant comme composant monomère 50% en masse ou plus d'un (méth)acrylate répondant à la formule CH₂=C(R₁)COOR₂, dans laquelle R₁ représente de l'hydrogène ou un groupe méthyle, et R₂ représente un groupe alkyle substitué ou non-substitué de 1 à 20 atomes de carbone, ayant une masse moléculaire moyenne en poids de 500.000 à 3.000.000 tel que déterminé par chromatographie sur gel perméable, et sensiblement sans composant acide ;
de 5 à 100 parties en masse d'un polymère aromatique à faible masse moléculaire ayant une masse moléculaire moyenne en poids de 500 à 4.000 tel que déterminé par chromatographie sur gel perméable, sur base de 100 parties en masse du polymère (méth)acrylique ; et
de 5 à 100 parties en masse de particules fines à base de métal ayant une taille de particule moyenne de 5 à 100 nm, sur base de 100 parties en masse du polymère (méth)acrylique.

2. Composition adhésive sensible à la pression selon la revendication 1, dans laquelle le polymère (méth)acrylique est un copolymère comprenant en outre comme composant monomère de 0,05 à 10 % en masse d'un (méth)acrylate contenant un groupe hydroxyle répondant à la formule CH₂=C(R₁)COOCₙH₂ₙOH, dans laquelle R₁ représente un hydrogène ou un groupe méthyle, et n représente un entier compris entre 1 et 10.

3. Composition adhésive sensible à la pression selon la revendication 1 ou 2, comprenant en outre de 0,02 à 2 parties en masse d'un agent de réticulation, sur base de 100 parties en masse du polymère (méth)acrylique.

4. Composition adhésive sensible à la pression selon l'une quelconque des revendications 1 à 3, dans laquelle le polymère (méth)acrylique est un polymère greffé ayant une chaîne latérale contenant une composition différente d'une chaîne principale formant un squelette.

5. Composition adhésive sensible à la pression selon la revendication 4, dans laquelle la chaîne principale présente une température de transition vitreuse inférieure ou égale à 250 K, et/ou dans laquelle la chaîne latérale présente une température de transition vitreuse supérieure ou égale à 300 K.

6. Couche adhésive sensible à la pression obtenue à partir d'une composition adhésive sensible à la pression selon l'une quelconque des revendications 1 à 5.

7. Couche adhésive sensible à la pression selon la revendication 6, présentant une fraction de gel de 40 à 90 % en masse.

8. Couche adhésive sensible à la pression selon la revendication 6 ou 7, présentant une turbidité inférieure ou égale à 20 %.

9. Feuille adhésive sensible à la pression comprenant un support, et la couche adhésive sensible à la pression selon l'une quelconque des revendications 6 à 8 formée sur au moins une face du support.
